# EUROPÄISCHE PATENTANMELDUNG

(11) **EP 0 750 149 A1**
(43) Veröffentlichungstag der Anmeldung: **27.12.1996**
(21) Anmeldenummer: 96109769.8
(22) Anmeldetag: 18.06.1996
(51) Int. Cl.: F16L 21/03

(54) **Bauteil für eine Steckmuffenverbindung**

(30) Priorität: 20.06.1995 DE 19522279
(71) Anmelder: Georg Prinzing GmbH & Co. KG Betonformen- und Maschinenfabrik, 89143 Blaubeuren (DE)
(72) Erfinder: Kraiss, Richard, 89150 Laichingen (DE)
(74) Vertreter: Kratzsch, Volkhard, Dipl.-Ing.

(57) **Zusammenfassung**

Die Steckmuffenverbindung ist durch Zusammenschieben des Bauteils (10) mit einem zweiten Bauteil (11) herstellbar, wobei beim Zusammenschieben zumindest eine im Muffenspalt (13) befindliche Dichtungseinrichtung (12) mit einem auf der Kontaktfläche (15) des Bauteils (10) befindlichen Gleitmittel (14) in Berührung gelangt. Das Gleitmittel (14) ist z.B. bereits bei der Herstellung des Bauteils (10) auf dessen Kontaktfläche festhaftend aufgebracht und gewährleistet ein gutes Gleiten der Kompressionsdichtung auf dieser Dichtfläche.

## Beschreibung

Die Erfindung bezieht sich auf ein Bauteil für eine Steckmuffenverbindung mit den Merkmalen im Oberbegriff des Anspruchs 1.

Bei der Herstellung einer Steckmuffenverbindung durch Zusammenschieben zweier Bauteile, z.B. zweier Rohre, ist es erforderlich, daß die dazwischen befindliche mindestens eine Dichtungseinrichtung möglichst leicht an der als Dichtfläche fungierenden Kontaktfläche entlanggleitet. Man hat daher entsprechende Maßnahmen bei der Dichtung selbst vorgesehen. So ist z.B. eine Dichtung bekannt (DE 38 26 622 A1),an der eine beim Zusammenstecken der Rohre in Steckrichtung umkrempelbare Fahne befestigt ist, die zumindest über einen Teil ihrer Länge durch ein Gleitmittel gegenüber dem übrigen Teil der Dichtung verschiebbar ist, wobei das Gleitmittel von einer festhaftend angeordneten, dünnwandigen lack- oder folienartigen Schicht gebildet ist. Das Gleitmittel muß nicht nur unmittelbar an der Fahne angeordnet sein, sondern es kann auch an der ihr zugekehrten Fläche der Dichtung und darüber hinaus noch an solchen Flächen der Dichtung angeordnet werden, die nicht mit der Fahne in Berührung stehen oder in Berührung kommen oder aus anderen Gründen ein Schmiermittel als zweckmäßig erweisen lassen. Ferner ist eine Dichtung bekannt (DE 42 29 609 A1), die aus einem Elastomerkörper und einem in letzteren einknüpfbaren Einknüpfteil zusammengesetzt ist, der aus einem innen hohlen Gleitmantel besteht und z.B. schlauchartig ist. Im inneren dieses Gleitmantels ist ein Schmiermittel enthalten, das als Gleitmittel für die Dichtung dient. Bei einer anderen Ausführungsform besteht der Einknüpfteil aus Vollmaterial, das nahezu gänzlich im Elastomerkörper aufgenommen ist, allerdings unter Belassung eines Hohlraumes, in den ein Schmiermittel eingefüllt ist, welches beim Zusammenpressen beider Teile der Dichtung ausgepreßt wird und beide Dichtungsteile schmiert. Eine andere bekannte Dichtung (EP 0 343 677 A1) ist ähnlich gestaltet. Hier ist am einen Bauteil eine Kompressionsdichtung gehalten, während am anderen Bauteil ein mit Schmiermittel gefüllter, plattgedrückter Schlauch im Bereich der Kompressionsdichtung vorgesehen ist. Ferner ist ein Dichtring bekannt (EP 0 556 545 A1), der aus einem Elastomer gebildet ist, dem mindestens ein Gleitmittel beigemischt ist, welches innerhalb der Mischsubstanz positionsveränderlich angeordnet ist. Das Gleitmittel kann zur Bildung eines Gleitfilmes aus einer Oberfläche der Dichtung austreten und bildet dann einen dortigen Gleitfilm. Auch sind Dichtringe bekannt (DE 29 00 437 A1), die außen mit einem Schmier- oder Gleitmittel versehen sind. Bekannt ist ferner eine Dichtung (DE 39 09 381 A1), die aus einem am einen Rohrteil anzubringenden Dichtring und aus einem zugeordneten, bandförmigen Gleitring zusammengesetzt ist, der auf dem anderen Rohrteil aufzubringen ist. Zwischen dem Dichtring und dem Gleitring befindet sich ein Gleitmittel, mittels dessen der Gleitring auf dem Dichtring verschiebbar ist. Die einander zugeordneten Flächen des Dichtringes und des Gleitringes sind mit diesem Gleitmittel versehen, das z.B. ein flüssiges oder pastenartiges Mittel ist oder aus einer festhaftend angeordneten, dünnwandigen lack- oder folienartigen Beschichtung besteht. In all diesen zuvor erläuterten Fällen befindet sich das Gleitmittel in Bereichen zwischen zwei aneinandergleitenden Flächen eines Dichtungsteiles, wobei das Gleitmittel jeweils Bestandteil der Dichtung ist. All diesen Dichtungen haften folgende Nachteile an. Die Dichtungen sind sehr kompliziert in der Herstellung und deswegen teuer. Je nach Viskosität und Temperatur fließt das Gleitmittel unkontrolliert weg. Bei längerer Lagerung befindet sich das Gleitmittel nicht mehr an der Stelle, wo es sein soll und wirken soll.

Es wurde ferner bereits ein Bauteil der eingangs genannten Art vorgeschlagen, bei dem vor dem Zusammenschieben zweier Bauteile auf die Kontaktfläche des einen Bauteils ein Gleitmittel manuell aufgetragen wird. Das Gleitmittel ist hinsichtlich seiner Konsistenz flüssig bis pastenförmig und wird z.B. mit dem Pinsel aufgestrichen. Diese Methode hat folgende Nachteile. Durch die manuelle Tätigkeit sind Fehlerquellen vorgegeben. Oft wird das falsche Gleitmittel aufgetragen oder das Auftragen des letzteren gänzlich vergessen, zumal dies Zeit erfordert und lästig ist. Mitunter wird das Gleitmittel zwar aufgebracht, jedoch nicht an der richtigen Stelle, z.B. direkt auf der Dichtung, so daß beim Zusammenschieben der Bauteile das Gleitmittel dann von der Dichtung abgerieben wird und die Dichtung dann auf einer solchen Kontaktfläche entlanggleitet, die gar kein Gleitmittel trägt. In solchen Fällen blockiert die Dichtung häufig beim Zusammenschieben zweier Bauteile. Ein unkontrolliertes Verschieben der Dichtung im Dichtungsspalt und ein Verklemmen sind die Folge.

Der Erfindung liegt die Aufgabe zugrunde, ein Bauteil der eingangs genannten Art zu schaffen, mit dem die letztgenannten Nachteile beseitigt sind und das montagefreundlich ist und sicherstellt, daß beim Zusammenfügen zweier Bauteile die mindestens eine Dichtungseinrichtung an einem Bauteil auf der zugeordneten Kontaktfläche des Bauteils möglichst leicht entlanggleitet.

Die Aufgabe ist bei einem Bauteil der eingangs genannten Art gemäß der Erfindung durch die Merkmale im Anspruch 1 gelöst. Dadurch, daß das Gleitmittel auf der Kontaktfläche des Bauteils z.B.bereits bei dessen Herstellung festhaftend aufgebracht ist, wird z.B. bereits vom Hersteller des Bauteils ein Bauteil mit integriertem Gleitmittel bereitgestellt. Das festhaftend aufgetragene Gleitmittel haftet dauerhaft, auch bei etwaigen äußeren Witterungseinflüssen. Durch ein so gestaltetes Bauteil mit integriertem Gleitmittel werden die eingangs herausgestellten Fehlerquellen und Nachteile vollständig ausgeschaltet. Die so beschaffenen Bauteile sind montagefreundlich. Sie ermöglichen ein problemloses und schnelles Zusammenschieben zur Herstellung einer Steckmuffenverbindung, da für das Zusammenfügen der Bauteile keinerlei zusätzliche Maßnahmen erforderlich sind. Im übrigen ist das so gestaltete Bauteil einfach und kostengünstig. Es hat zudem den Vorteil, daß bei der Herstellung einer Steckmuffenverbindung verschiedenartige Dichtungseinrichtungen zum Einsatz kommen können, da man nicht auf besondere, mit Gleitmittel versehene Dichtungseinrichtungen angewiesen ist. Das beim erfindungsgemäßen Bauteil festhaftend aufgebrachte Gleitmittel kann aus einer dünnen oder auch dickeren Schicht bestehen, wobei letztere z.B. durch ein dementsprechendes, vorgefertigtes Einlageteil, z.B. aus Kunststoff, gebildet sein kann, das z.B. bei der Herstellung des Bauteils, z.B. bei dessen Formgebung, gleich daran fest angebracht wird, z.B. eingeformt oder angeformt oder in sonstiger Weise fest angebracht wird.

Weitere vorteilhafte Erfindungsmerkmale und Ausgestaltungen ergeben sich aus den Ansprüchen 2 bis 25.

Gegenstand der Erfindung ist ferner ein Verfahren mit den Merkmalen im Anspruch 26. Vorteilhafte weitere Erfindungsmerkmale und Ausgestaltungen dazu enthalten die Ansprüche 27 bis 35.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus den Zeichnungen entnehmbaren Merkmale weitere Bestandteile der Erfindung, auch wenn sie nicht besonders hevorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: einen schematischen senkrechten Schnitt eines Teiles eines als Schachtring ausgebildeten Bauteiles gemäß einem ersten Ausführungsbeispiel,
- Fig. 2: einen schematischen senkrechten Schnitt eines Teils einer Steckmuffenverbindung, die aus dem ersten Schachtring gemäß Fig. 1 und einem weiteren Schachtring gebildet ist,
- Fig. 3: einen schematischen senkrechten Schnitt eines Teils eines Bauteils in Form eines Schachtringes gemäß einem zweiten Ausführungsbeispiel,
- Fig. 4: einen schematischen senkrechten Schnitt eines Teils einer Steckmuffenverbindung, die aus dem Schachtring in Fig. 3 und einem weiteren Schachtring gebildet ist.

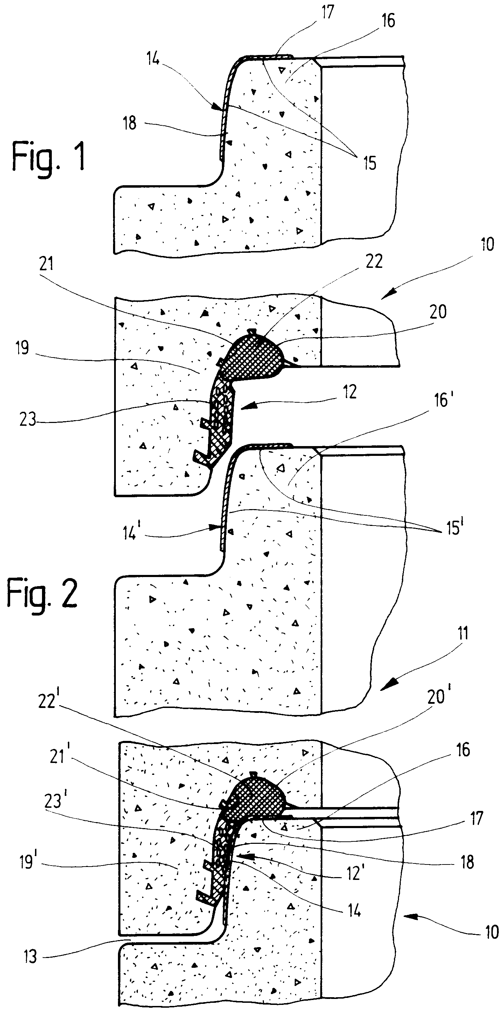

Das erste Ausführungsbeispiel in Fig. 1 und 2 zeigt ein Bauteil 10 für eine Steckmuffenverbindung, die durch Zusammenschieben des Bauteils 10 mit einem zweiten Teil 11 herstellbar ist, wobei der zweite Teil 11 und das Bauteil 10 baugleich ausgebildet sind. Bei beiden handelt es sich z.B. um ein Formteil, z.B. aus Beton oder Polymerbeton oder Faserbeton oder Faserzement oder aus Ton oder Gußmaterial oder Kunststoff od.dergl. Mit Vorteil können das Bauteil 10 und/oder der damit z.B. baugleiche Teil 11 als Straßenablauf oder Hofablauf oder als Schachtring oder Schachthals oder Schachtunterteil oder als Schornsteinelement oder Wandelement oder Mauerelement oder als Rohr oder Vortriebsrohr oder Benzinabscheider od.dergl. ausgebildet sein. Beim gezeigten Ausführungsbeispiel in Fig. 1 und 2 besteht das Bauteil 10 und gleichermaßen auch der damit z.B. baugleiche zweite Teil 11 aus einem Betonteil z.B. zur Bildung von Rohren, Schächten od.dergl.

Beim koaxialen Zusammenschieben des Bauteils 10 und des zweiten Teils 11 gelangt zumindest eine Dichtungseinrichtung 12, die sich dann innerhalb eines Muffenspaltes 13 befindet, mit einem Gleitmittel 14 in Berührung, das sich auf der Kontaktfläche 15 des Bauteils 10 befindet.

Beim ersten Ausführungsbeispiel in Fig. 1 und 2 weist das Bauteil 10 ein oberes Spitzende 16 mit einer etwa flachebenen, z.B. ringförmigen, Stirnfläche 17 und einer daran angrenzenden, etwa zylindrischen Außenfläche 18 auf, die die Kontaktfläche 15 bilden. Das Gleitmittel 14 kann sich hierbei auf der Stirnfläche 17 und/oder der Außenfläche 18 befinden. Beim gezeigten Ausführungsbeispiel in Fig. 1 und 2 ist das Gleitmittel 14 als durchgehende Schicht sowohl auf der Stirnfläche 17 als auch auf der Außenfläche 18 vorgesehen.

Das Bauteil 10 in Fig. 1 und 2 ist am unteren Ende mit einer Glocke 19 versehen, welche die mindestens eine Dichtungseinrichtung 12 aufweist.

Der mit dem Bauteil 10 baugleiche zweite Teil 11 weist in gleicher Weise am oberen Spitzende 16' ein Gleitmittel 14' und am unteren Ende eine Glocke 19' auf, in der sich die Dichtungseinrichtung 12' befindet.

Das Gleitmittel 14,14' ist mit Vorteil z.B. bereits bei der Herstellung des Bauteils 10 bzw. 11 auf dessen Kontaktfläche 15 bzw. 15' festhaftend aufgebracht. Das im Betonwerk hergestellte Bauteil 10 bzw. 11 wird dann mit bei der Herstellung bereits aufgebrachtem Gleitmittel 14, 14' bereitgestellt und ausgeliefert. Das Gleitmittel 14,14' kann aber auch in einer anderen Phase als derjenigen der Herstellung des Bauteils 10,11 aufgebracht werden.

Das Gleitmittel 14,14' ist mit Vorzug witterungsbeständig, insbesondere beständig z.B. gegen Wärme, Sonneneinstrahlung, Kälte, Frost, Feuchtigkeit, Regen, Schnee od.dergl. Dadurch kann das jeweilige Bauteil 10, 11 wie üblich im Freien gelagert werden bzw. an der Baustelle allen möglichen Witterungseinflüssen ungestört ausgesetzt werden.

Das Gleitmittel 14,14' ist aus einer Gleitschicht gebildet, die z.B. eine Wachsschicht oder eine harzartige oder harzähnliche Schicht oder statt dessen eine Lackschicht, vorzugsweise mit synthetischer Zusammensetzung, sein kann. Das Gleitmittel 14, 14' weist einen niedrigen Reibwert gegenüber Gummi, Kunstgummi, einem Elastomer od. dergl. elastischem Dichtungsmaterial auf, aus dem z.B. die Dichtungseinrichtung 12, 12' ganz oder teilweise bestehen kann.

Bei der Herstellung des Bauteils 10 bzw. 11 kann das Gleitmittel 14, 14', insbesondere die Wachsschicht oder die harzartige oder harzähnliche Schicht oder die Lackschicht, im flüssigen Zustand aufgebracht werden. Dies kann z.B. durch Aufspritzen oder Aufsprühen oder Aufstreichen oder Eintauchen in ein Tauchbad od. dergl. geschehen. Auch ein Aufbringen durch Auflegen einer Folie ist möglich. Von Vorteil kann es sein, wenn das Gleitmittel 14, 14', insbesondere in Form einer Wachsschicht, in erhitztem Zustand aufgebracht wird. Ein Gleitmittel in Form einer Wachsschicht kann mit Vorteil im Heißverfahren dünn aufgetragen werden. Beim Zusammenschieben des Bauteiles 10 und des zweiten Teiles 11 ergibt sich dann im Bereich der Steckmuffenverbindung zwischen dem Gleitmittel 14 und der Dichtungseinrichtung 12', insbesondere dem Gummimaterial dieser Dichtungseinrichtung 12', ein Kriechvorgang, so daß dadurch die Reibung beim Zusammenschieben der Bauteile 10, 11 wesentlich verringert wird.Die Dichtungseinrichtung 12' kann beim Zusammenschieben relativ leicht auf der Kontaktfläche 15, und zwar auf dem dortigen Gleitmittel 14, entlanggleiten.

Besteht das Gleitmittel 14,14' aus einer harzartigen oder harzähnlichen Schicht, so führen derartige Materialien ebenfalls zu einem solchen Kriechvorgang beim Zusammenschieben der Bauteile 10, 11. Eine derartige harzartige oder harzähnliche Schicht kann ebenfalls im erhitzten Zustand aufgebracht werden wie eine Wachsschicht oder auch im kalten Zustand. Besteht das Gleitmittel 14, 14' aus einer Lackschicht, vorzugsweise mit synthetischer Zusammensetzung, so kann ein derartiges aufgebrachtes Gleitmittel 14, 14' auf der Kontaktfläche 15, 15' des Bauteils 10 bzw. 11 aushärten. Bei derartigen synthetischen Stoffen ergibt sich der Vorteil, daß die Eigenschaften durch unterschiedliche Zusammensetzung optimal auf die verlangten Forderungen eingestellt werden können, z.B. insbesondere in bezug auf Gleiteigenschaften und Witterungsbeständigkeit. Das Gleitmittel 14,14' kann auch aus Molybdändisulfid und/oder Molybdänsulfat und/oder Graphit bestehen.

Die mindestens eine Dichtungseinrichtung 12 des Bauteils 10 bzw. 12' des zweiten, baugleichen Bauteils 11 ist mit besonderem Vorteil bereits bei der Formgebung des Bauteils 10 bzw. 11, insbesondere als Betonformteil, in das Material des Bauteils 10 bzw. 11 eingearbeitet. Für diese mindestens eine Dichtungseinrichtung gilt hinsichtlich der Einbringung und der Gestaltung das gleiche, was bereits in der DE-OS 43 23 734 gezeigt und beschrieben ist, auf die deswegen vollinhaltlich zur Vermeidung von Wiederholungen hiermit Bezug genommen ist. Die bereits bei der Herstellung des Bauteils 10 bzw. 11 einbetonierte mindestens eine Dichtungseinrichtung 12 bzw. 12' weist zumindest einen Ausgleichskörper 20, 20' auf, der mindestens einen inneren Hohlraum 21, 21' mit einer Füllung 22, 22' aus nicht kompressiblem Material enthält. Diese Füllung 22 besteht z.B. aus nicht kompressiblem Material in Form einer unter Druckbelastung fließfähigen Masse. Diese Masse kann z.B. aus einer körnigen Masse, z.B. aus Sand, bestehen. Die Masse kann statt dessen auch aus einer platischen Masse, z.B. aus Kitt oder aus einer kittartigen Masse, bestehen. Die Füllung 22 ist in der Lage, lastübertragend zu wirken und einen Lastausgleich zu bewirken.

Die mindestens eine Dichtungseinrichtung 12, 12' weist ferner zumindest ein Kompressionsdichtelement 23,23' auf. Beim ersten Ausführungsbeispiel in Fig. 1 und 2 sind der mindestens eine Ausgleichskörper 20, 20' und das mindestens eine Kompressionsdichtelement 23, 23' zu einem einzigen Bauteil vereinigt, wie dies auch in der DE-OS 43 23 734 oder der EP-OS 634 532 gezeigt und beschrieben ist. Auch auf letztere wird hiermit zur Vermeidung unnötiger Wiederholungen hinsichtlich der mindestens einen Dichtungseinrichtung 12 ausdrücklich Bezug genommen.

Beim Bauteil 10 ist das Gleitmittel 14 auf demjenigen Bereich der Kontaktfläche 15 aufgebracht, auf dem die mindestens eine Dichtungseinrichtung 12' am zugeordneten Ende, und zwar bei der Glocke 19', des blaugleichen zweiten Bauteils 11 beim Zusammenschieben beider Bauteile 10, 11 entlanggleitet. Bei der Herstellung der Steckmuffenverbindung zwischen den beiden Bauteilen 10, 11 wird das zumindest eine Kompressionsdichtelement 23. 23' im Muffenspalt 13 verpreßt. Da das Kompressionsdichtelement 23, 23', und zwar zumindest dieses, dabei auf dem Gleitmittel 14, 14' entlanggleitet, wird der Reibfaktor zwischen der Dichtungseinrichtung 12, 12' und der zugeordneten Kontaktfläche 15, 15' der Bauteile 10, 11 wesentich verringert. Beim Herstellen der Steckmuffenverbindung ergibt sich somit ein leichtes Gleiten der Dichtungseinrichtung 12, 12' auf der zugeordneten Dichtfläche. Damit wirkt sich die sonst ohne das Gleitmittel 14, 14' relativ große Rauhigkeit und Porigkeit der jeweiligen Kontaktflche 15, 15' vor allem bei aus Beton bestehenden Bauteilen 10, 11 nicht mehr nachteilig aus. Es ergibt sich beim Zusammenschieben beider Bauteile 10, 11 ein leichtgängiges Gleiten der Dichtungseinrichtung 12, 12' auf dem Gleitmittel 14, 14'. Dadurch wird die mindestens eine Dichtungseinrichtung 12 weniger mechanisch beansprucht und somit geschont. Dadurch, daß das Gleitmittel 14, 14' bereits bei der Herstellung des jeweiligen Bauteils 10, 11 auf dessen Kontaktfläche 15, 15' festhaftend aufgebracht ist, ist bei der Auslieferung des Bauteils 10, 11 bereits garantiert, daß dieses mit dem integrierten Gleitmittel 14, 14' versehen ist. Es entfällt somit die Notwendigkeit, ein derartiges Gleitmittel erst an der Baustelle und vor dem Zusammenfügen der Bauteile 10, 11 auftragen zu müssen, was häufig vergessen wird oder zu Fehlern führt, weil z.B. das falsche Gleitmittel aufgetragen wird oder letzterse an falscher Stelle aufgebracht wird. Dadurch, daß das Gleitmittel 14, 14' bereits werkseitig fest auf die jeweilige Kontaktfläche 15, 15' aufgetragen ist, werden die vorgenannten Fehlerquellen komplett ausgeschaltet. Die Bauteile 10, 11 sind montagefertig und somit montagefreundlich. Für das Zusammenfügen dieser sind keinerlei zusätzliche Maßnahmen erforderlich. Für die Herstellung von Schächten müssen die Bauteile 10, 11 und weitere lediglich aufeinandergesetzt werden. Für die Herstellung von Rohren müssen die Bauteile 10, 11 und weitere lediglich z.B. horizontal zusammengeschoben werden. Beim Zusammenschieben der Bauteile 10, 11 und weiterer ist mit Sicherheit vermieden, daß Teile der jeweiligen Dichtungseinrichtung 12, 12' abgerieben werden oder beim Zusammenschieben blockieren, im Dichtungsspalt unkontrolliert verschoben werden, verklemmen oder in sonstiger Weise das Zusammenstecken behindern.

Das Gleitmittel 14 ist auf demjenigen Bereich der Kontaktfläche 15 des Bauteils 10 aufgebracht, auf dem das Kompressionsdichtelement 23' und/oder der Ausgleichskörper 20' am zugeordneten Ende 19' des zweiten Bauteils 11 beim Zusammenschieben beider Bauteile 10, 11 entlanggleitet. Da das Gleitmittel 14 vor allem für das Zusammenwirken mit dem beim Zusammenstecken der Bauteile 10, 11 verpreßten Kompressionsdichtelement 23' erforderlich ist, kann es ausreichen, das Gleitmittel 14 nur auf demjenigen Bereich der Kontaktfläche 15, z.B. nur im Bereich der Außenfläche 18, aufzubringen, wo das Kompressionsdichtelement 23' des zweiten Bauteils 11 beim Zusammenschieben beider Bauteile 10, 11 entlanggleitet.

Mit Vorteil ist das Gleitmittel 14 beim Bauteil 10 aber auch auf demjenigen Bereich der Kontaktfläche 15, also nicht nur auf der Außenfläche 18, sondern auch auf der Stirnfläche 17 angebracht, auf dem auch der Ausgleichskörper 20' des anderen Bauteils 11 beim Zusammenschieben beider aufsitzt. Dadurch, daß das Gleitmittel 14 somit auch auf der Stirnfläche 17 aufgebracht ist, wird die lastausgleichende Wirkung des Ausgleichskörpers 20' verbessert, weil dessen Füllung 22' sich dadurch leichter auf dem Spitzende 16, insbesondere der Stirnfläche 17, in Querrichtung verschieben kann.

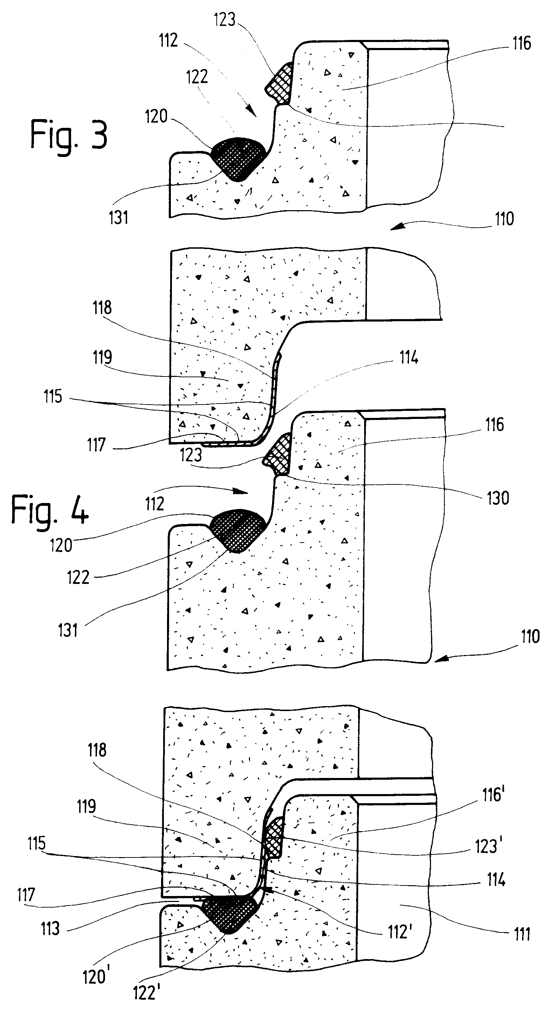

Bei dem in Fig. 3 und 4 gezeigten zweiten Ausführungsbeispiel sind für die Teile, die dem ersten Ausführungsbeispiel entsprechen und die nachfolgend besonders hervorgehoben sind, um 100 größere Bezugszeichen verwendet, so daß dadurch zur Vermeidung von Wiederholungen auf die Beschreibung des ersten Ausführungsbeispieles in Fig. 1 und 2 Bezug genommen ist.

Beim zweiten Ausführungsbeispiel weist das Bauteil 110, insbesondere in der Ausbildung als Betonteil, z.B. zur Bildung von Rohren, Schächten od.dergl., am unteren Ende eine Glocke 119 mit einer etwa flachebenen, z.B. ringförmigen, Stirnfläche 117 und einer daran anschließenden, etwa zylindrischen Innenfläche 118 als Kontaktfläche 115 auf. Das Gleitmittel 114 ist auf der Stirnfläche 117 und/oder der Innenfläche 118 vorgesehen und in gleicher Weise wie beim ersten Ausführungsbeispiel aufgebracht und gestaltet.

Das Gleitmittel 114 ist wie beim ersten Ausführungsbeispiel als durchgehende Schicht auf der Stirnfläche 117 und der Innenfläche 118 vorgesehen. Das Bauteil 110 weist außerdem ein oberes Spitzende 116 auf, das die mindestens eine Dichtungseinrichtung 112 trägt. Bei diesem zweiten Ausführungsbeispiel ist das Kompressionsdichtelement 123 aus einem eigenständigen, vom Ausgleichskörper 120 separierten Element gebildet. Das Kompressionsdichtelement 123 aus Gummi, Kunstgummi, einem Elastomer od.dergl. ist ringförmig und auf einen Absatz 130 des Spitzendes 116 aufgebracht. Der separate Ausgleichskörper 120 hat im Querschnitt etwa Dreieckform, ist ringförmig und in einer im Querschnitt etwa V-förmig vertieften Rinne 131 des Bauteils 110 eingelegt, in der der Ausgleichskörper 120 formschlüssig lagert. Der Unterschied zum ersten Ausführungsbeispiel in Fig. 1 und 2 besteht somit darin, daß beim zweiten Ausführungsbeispiel in Fig. 3 und 4 die mindestens eine Dichtungseinrichtung 112 im Bereich des Spitzendes 116 des Bauteils 110 vorgesehen ist, während beim ersten Ausführungsbeispiel die mindestens eine Dichtungseinrichtung 12 im Bereich der unteren Glocke 19 angeordnet ist. Dementsprechend vertauscht ist auch das Gleitmittel 14 beim zweiten Ausführungsbeispiel gemäß Fig. 3 und 4 im Bereich der Glocke 119 vorgesehen, während beim ersten Ausführungsbeispiel in Fig. 1 und 2 das Gleitmittel 14 im Bereich des Spitzendes 16 vorgesehen ist.

Das zweite Bauteil 111, von dem in Fig. 4 nur das obere Spitzende 116' erkennbar ist, ist baugleich mit dem ersten Bauteil 110 gestaltet. Somit weist auch das zweite Bauteil 111 am Spitzende 116' eine gleichartige Dichtungseinrichtung 112' mit einem Kompressionsdichtelement 123' und einem Ausgleichskörper 120' auf, wobei am nicht sichtbaren unteren Ende im Bereich der Glocke ebenfalls ein Gleitmittel analog dem Gleitmittel 114 des ersten Bauteils 110 vorgesehen ist.

In Fig. 3 und 4 ist erkennbar, daß beim Zusammenschieben der Bauteile 110, 111 das Kompressionsdichtelement 123' im Muffenspalt 113 zusammengepreßt wird. Es wird dabei verformt. Dadurch, daß die Innenfläche 118 in diesem Bereich das Gleitmittel 114 aufweist, kann das Kompressionsdichtelement 123' beim Zusammenschieben der Bauteile 110, 111 leicht an dieser Innenfläche 118, und zwar auf dem Gleitmittel 114, entlanggleiten mit stark reduziertem Reibfaktor.

Da die Gleitschicht 114 auch im Bereich der unteren Stirnfläche 117 des Bauteils 110 vorgesehen ist, wo über den Ausgleichskörper 120' die Lastübertragung erfolgt, wird der Lastausgleich verbessert, weil eine Querverschiebung der Füllung 122' im Ausgleichskörper 120' auf der Stirnfläche 117 dadurch erleichtert ist.

## Patentansprüche

1. Bauteil für eine Steckmuffenverbindung, die durch Zusammenschieben des letzteren (10;110) mit einem zweiten Teil (11;111) herstellbar ist, wobei beim Zusammenschieben zumindest eine im Muffenspalt (13;113) befindliche Dichtungseinrichtung (12,12';112,112') mit einem auf der Kontaktfläche (15,15';115) des Bauteils 10;110) befindlichen Gleitmittel (14,14';114) in Berührung gelangt,
**dadurch gekennzeichnet**,
daß das Gleitmittel (14,14';114) auf der Kontaktfläche des Bauteils (10,11;110,111) festhaftend aufgebracht ist.

2. Bauteil nach Anspruch 1,
**dadurch gekennzeichnet**,
daß das Gleitmittel (14,14';114) witterungsbeständig ist, insbesondere beständig z.B. gegen Wärme, Sonneneinstrahlung, Kälte, Frost, Feuchtigkeit, Regen, Schnee od.dergl. ist.

3. Bauteil nach Anspruch 1 oder 2,
**dadurch gekennzeichnet**,
daß das Gleitmittel (14,14';114) aus einer Gleitschicht gebildet ist.

4. Bauteil nach einem der Ansprüche 1 bis 3,
**dadurch gekennzeichnet**,
daß das Gleitmittel (14,14';114) aus einer Wachsschicht besteht.

5. Bauteil nach einem der Ansprüche 1 bis 3,
**dadurch gekennzeichnet**,
daß das Gleitmittel (14,14';114) aus einer harzartigen oder harzähnlichen Schicht besteht.

6. Bauteil nach einem der Ansprüche 1 bis 3,
**dadurch gekennzeichnet**,
daß das Gleitmittel (14,14'114) aus einer Lackschicht, vorzugsweise mit synthetischer Zusammensetzung, besteht.

7. Bauteil nach einem der Ansprüche 1 bis 6,
**dadurch gekennzeichnet**,
daß das Gleitmittel (14;114';114) aus Molybdändisulfid und/oder Molybdänsulfat und/oder Graphit besteht.

8. Bauteil nach einem der Ansprüche 1 bis 7 ,
**dadurch gekennzeichnet**,
daß das Gleitmittel (14,14';114) einen niedrigen Reibwert gegenüber Gummi, Kunstgummi, einem Elastomer od.dergl. elastischen Dichtungsmaterial aufweist.

9. Bauteil nach einem der Ansprüche 1 bis 8,
**dadurch gekennzeichnet**,
daß das Bauteil (10;110) und/oder der zweite Teil (11; 111) aus einem Formteil, z.B. aus Beton, Polymerbeton, Faserbeton, Faserzement, Ton, Gußmaterial, Kunststoff od.dergl. gebildet ist.

10. Bauteil nach einem der Ansprüche 1 bis 9,
**dadurch gekennzeichnet,**
daß das Bauteil (10;110) und der zweite Teil (11;111) baugleich ausgebildet sind.

11. Bauteil nach einem der Ansprüche 1 bis 10,
**dadurch gekennzeichnet**,
daß das Bauteil (19;110) und/oder der zweite Teil (11; 111) als Straßen- oder Hofablauf, Schachtring, Schachthals, Schachtunterteil, Schornsteinelement, Wand- oder Mauerelement, Rohr, Vortriebsrohr, Benzinabscheider od.dergl. ausgebildet ist.

12. Bauteil nach einem der Ansprüche 1 bis 11,
**dadurch gekennzeichnet**,
daß dieses (10,11), insbesondere in der Ausbildung als Betonteil, z.B. zur Bildung von Rohren, Schächten, od.dergl., ein oberes Spitzende (16,16') mit einer etwa flachebenen, z.B ringförmigen, Stirnfläche (17) und einer daran anschließenden, etwa zylindrischen Außenfläche (18) als Kontaktfläche (15,15') aufweist und daß das Gleitmittel (14,14') auf der Stirnfläche (17) und/oder der Außenfläche (18) vorgesehen ist.

13. Bauteil nach Anspruch 12,
**dadurch gekennzeichnet**,
daß das Gleitmittel (14,14') als durchgehende Schicht auf der Stirnfläche (17) und der Außenfläche (18) vorgesehen ist.

14. Bauteil nach einem der Ansprüche 1 bis 13,
**dadurch gekennzeichnet**,
daß dieses (10,11), insbesondere in der Ausbildung als Betonteil, z.B. zur Bildung von Rohren, Schächten, od.dergl., am unteren Ende mit einer Glocke (19,19') versehen ist, die die mindestens eine Dichtungseinrichtung (12,12') aufweist.

15. Bauteil nach einem der Ansprüche 1 bis 11,
**dadurch gekennzeichnet**,
daß dieses (110,111), insbesondere in der Ausbildung als Betonteil, z.B. zur Bildung von Rohren, Schächten od.dergl., am unteren Ende eine Glocke (119) mit eine etwa flachebenen, z.B. ringförmigen, Stirnfläche (117) und einer daran anschließenden, etwa zylindrischen Innenfläche (118) als Kontaktfläche (115) aufweist und daß das Gleitmittel (114) auf der Stirnfläche (117) und/oder der Innenfläche (118) vorgesehen ist.

16. Bauteil nach Anspruch 15,
**dadurch gekennzeichnet**,
daß das Gleitmittel (114) als durchgehende Schicht auf der Stirnfläche (117) und der Innenfläche (118) vorgesehen ist.

17. Bauteil nach Anspruch 15 oder 16 ,
**dadurch gekennzeichnet**,
daß dieses (110,111), insbesondere in der Ausbildung als Betonteil, z.B. zur Bildung von Rohren, Schächten od.dergl., ein oberes Spitzende (116,116') aufweist, das die mindestens eine Dichtungseinrichtung (112,112') aufweist.

18. Bauteil nach einem der Ansprüche 1 bis 17,
**dadurch gekennzeichnet**,
daß die mindestens eine Dichtungseinrichtung (12,12'; 112,112') bereits bei der Formgebung des Bauteils (10, 11;110,111), insbesondere als Betonformteil, in das Material des Bauteils (10,11;110,111) eingearbeitet ist.

19. Bauteil nach einem der Ansprüche 1 bis 18,
**dadurch gekennzeichnet**,
daß das Gleitmittel (14,14';114) auf demjenigen Bereich auf der Kontaktfläche (15,15';115) aufgebracht ist, auf dem die mindestens eine Dichtungseinrichtung (12,12';112,112') am zugeordneten Ende des zweiten Teils (11;111) beim Zusammenschieben beider entlanggleitet.

20. Bauteil nach einem der Ansprüche 1 bis 19,
**dadurch gekennzeichnet**,
daß die mindestens eine Dichtungseinrichtung (12,12': 112,112') zumindest einen Ausgleichskörper (20,20';120, 120') aufweist, der mindestens einen inneren Hohlraum (21,21') mit einer Füllung (22,22';122,122') aus nicht kompressiblem Material enthält.

21. Bauteil nach einem der Ansprüche 1 bis 20 ,
**dadurch gekennzeichnet**,
daß die mindestens eine Dichtungseinrichtung (12,12'; 112,112') zumindest ein Kompressionsdichtelement (23,23';123,123') aufweist.

22. Bauteil nach einem der Ansprüche 1 bis 21,
**dadurch gekennzeichnet**,
daß der Ausgleichskörper (20,20') und das Kompressionsdichtelement (23,23') zu einem einstückigen Bauteil vereinigt sind.

23. Bauteil nach einem der Ansprüche 1 bis 21,
**dadurch gekennzeichnet**,
daß das Kompressionsdichtelement (123,123') aus einem eigenständigen, vom Ausgleichskörper (120,120') separierten Element gebildet ist.

24. Bauteil nach einem der Ansprüche 1 bis 23,
**dadurch gekennzeichnet**,
daß das Gleitmittel (14,14';114) zumindest auf demjenigen Bereich auf der Kontaktfläche (15,15';115) aufgebracht ist, auf dem das Kompressionsdichtelement (23,23';123,123') am zugeordneten Ende des zweiten Teils (11;111) beim Zusammenschieben beider Bauteile (10 und 11;110 und 111) entlanggleitet.

25. Bauteil nach einem der Ansprüche 1 bis 24,
**dadurch gekennzeichnet**,
daß das Gleitmittel (14,14';114) auf demjenigen Bereich auf der Kontaktfläche (15,15';115) aufgebracht ist, auf dem das Kompressionsdichtelement (23,23'123,123') und/oder der Ausgleichskörper (20,20';120,120') am zugeordneten Ende des zweiten Bauteils (11;111) beim Zusammenschieben beider Bauteile (10 und 11; 110 und 111) entlanggleitet.

26. Verfahren zum Herstellen eines Bauteils (10,11;110, 111) für eine Steckmuffenverbindung, die durch Zusammenschieben dieses Bauteils mit einem zweiten Bautei herstellbar ist, wobei beim Zusammenschieben zumindest eine im Muffenspalt (13;113) befindliche Dichtungseinrichtung (12,12';112,112') mit einem auf der Kontaktfläche (15,15';115) des Bauteils (10,11;110,111) befindlichen Gleitmittel (14,14';114) in Berührung gelangt,
**dadurch gekennzeichnet**,
daß das Gleitmittel (14,14';114) beim Herstellen des Bauteils (10,11;110,111) auf dessen Kontaktfläche (15, 15';115) festhaftend aufgebracht wird.

27. Verfahren nach Anspruch 26,
**dadurch gekennzeichnet**,
daß als Gleitmittel (14,14';114) eine Gleitschicht aufgebracht wird.

28. Verfahren nach Anspruch 26 oder 27,
**dadurch gekennzeichnet**,
daß als Gleitmittel (14,14';114) eine Wachsschicht aufgebracht wird.

29. Verfahren nach Anspruch 26 oder 27,
**dadurch gekennzeichnet**,
daß als Gleitmittel (14,14';114) eine harzartige oder harzähnliche Schicht aufgebracht wird.

30. Verfahren nach anspruch 26 oder 27,
**dadurch gekennzeichnet**,
daß als Gleitmittel (14,14';114) eine Schicht aus Molybdändisulfid und/oder Molybdänsulfat und/oder Graphit aufgebracht wird.

31. Verfahren nach Anspruch 26 oder 27,
**dadurch gekennzeichnet**,
daß als Gleitmittel (14,14';114) eine Lackschicht, vorzugsweise mit synthetischer Zusammensetzung, aufgebracht wird.

32. Verfahren nach einem der Ansprüche 26 bis 31,
**dadurch gekennzeichnet**,
daß das Gleitmittel (14,14';114), insbesondere die Wachsschicht oder die harzartige oder harzähnliche Schicht oder die Lackschicht, im flüssigen Zustand aufgebracht wird, z.B. durch Aufspritzen oder Aufsprühen oder Aufstreichen oder Eintauchen in ein Tauchbad.

33. Verfahren nach Anspruch 32,
**dadurch gekennzeichnet**,
daß das Gleitmittel (14,14';114), insbesondere die Wachsschicht, im erhitzten Zustand aufgebracht wird.

34. Verfahren nach Anspruch 32 ,
**dadurch gekennzeichnet**,
daß das Gleitmittel (14,14';114), insbesondere die harzartige oder harzähnliche Schicht, im kalten Zustand aufgebracht wird.

35. Verfahren nach einem der Ansprüche 26 bis 34,
**dadurch gekennzeichnet**,
daß das aufgebrachte Gleitmittel (14,14';114) auf der Kontaktfläche (15,15';115) des Bauteils (10,11;110,111) aushärtet.
